# EUROPÄISCHE PATENTSCHRIFT

(11) **EP 1 079 910 B1**
(45) Veröffentlichungstag und Bekanntmachung des Hinweises auf die Patenterteilung: **09.04.2003**
(21) Anmeldenummer: 99936283.3
(22) Anmeldetag: 19.05.1999
(51) Int. Cl.: B01D 53/94, B01J 21/06

(54) **VERFAHREN ZUR REINIGUNG DIESELMOTORISCHEN ABGASES**
METHOD FOR CLEANING DIESEL ENGINE EXHAUST GAS
PROCEDE D'EPURATION DE GAZ D'ECHAPPEMENT PRODUITS PAR UN MOTEUR DIESEL

(30) Priorität: 29.05.1998 DE 19824206
(43) Veröffentlichungstag der Anmeldung: 07.03.2001
(73) Patentinhaber: SIEMENS AKTIENGESELLSCHAFT, 80333 München (DE)
(72) Erfinder: NEUFERT, Ronald, D-96247 Michelau (DE); MATHES, Wieland, D-96247 Michelau (DE); WENZLAWSKI, Klaus, D-90429 Nürnberg (DE); WEISENSEL, Dietmar, D-93161 Sinzing (DE)
(86) Internationale Anmeldenummer: DE9901504
(87) Internationale Veröffentlichungsnummer: WO99062619

(56) Entgegenhaltungen:
- EP-A- 0 585 795
- EP-A- 0 827 778
- DE-C- 4 321 555
- US-A- 5 658 546
- PATENT ABSTRACTS OF JAPAN vol. 12, no. 405, 26. Oktober 1988 (1988-10-26) & JP 63 143941 A (NIPPON SHOKUBAI KAGAKU KOGYO CO), 16. Juni 1988 (1988-06-16)

## Beschreibung

Die Erfindung betrifft ein Verfahren zur Reinigung dieselmotorischen Abgases. Bei der Verbrennung von Dieselkraftstoff entsteht bekanntlich eine Vielzahl unterschiedlicher Schadstoffe sowie mit Kohlenwasserstoffen angereicherter Rußpartikel (im folgenden kurz Partikel genannt), die durch geeignete Katalysatoren mit spezifischwirkenden Aktivmassen und mit separaten Partikelfiltern entfernt oder zumindest reduziert werden. Bei Verwendung von SCR-Katalysatoren ist weiterhin eine Vorrichtung notwendig, mit der dem Abgasstrom ein Reduktionsmittel zudosiert werden kann. In EP 0 341 832 beispielsweise ist ein Reinigungsverfahren für dieselmotorische Abgase beschrieben, bei dem eine Vorrichtung mit einem platinhaltigen Katalysator mit einer Vorrichtung zum Herausfiltern von Partikeln kombiniert ist. Weiterhin werden häufig Adsorber eingesetzt, die Schadstoffe im unteren Temperaturbereich adsorbieren und bei erhöhten Temperaturen wieder desorbieren.

Der Erfindung liegt die Aufgabe zugrunde, ein hinsichtlich des gerätetechnischen Aufwandes vereinfachtes Verfahren zur Reinigung dieselmotorischen Abgases anzugeben.

Diese Aufgabe wird erfindungsgemäß durch ein Verfahren mit den Merkmalen des Anspruches 1 gelöst. Es hat sich überraschender Weise gezeigt, daß bei Verwendung einer Aktivmasse, die (in Gew.%) 70 - 95 % TiO₂, 2- 10 % WO₃ und/oder MoO₃, 0,1 - 5 % V₂O₅, 0,1 - 8 % CaO, 0,1 - 8 % Al₂O₃, 0,1 - 5 % B₂O₃ und 0,1 - 10 % SiO₂ enthält, simultan Stickoxide, Kohlenwasserstoffe und Partikel reduziert werden können. Es steht somit ein einstufiges katalytisches Verfahren zur Verfügung, bei dem ein separates Partikelfiltersystem bzw. primärseitige Maßnahmen zur Partikelreduzierung eingespart werden können.

Der Vorteil eines solchen Verfahrens hinsichtlich des gerätetechnischen Aufwandes und hinsichtlich des erforderlichen Einbauraumes liegen auf der Hand. Das vorgeschlagene Reinigungsverfahren arbeitet dabei auf übliche Weise. So wird beispielsweise zur Reduktion der Stickoxide nach dem SCR-Verfahren ein stickstoffhaltiges Reduktionsmittel vor dem erfindungsgemäßen Katalysator in den Abgasstrom eingedüst. Die erforderliche Menge an Reduktionsmittel wird in üblicher Weise aus den Motor- und den Motorabgasdaten durch Kennfeldsteuerung oder Sensorregelung ermittelt. Dabei werden übliche NOₓ, NH₃-, HC-, CO-, O₂-, Temperatur- oder sonstige Sensoren eingesetzt. Vorzugsweise wird ein Katalysator eingesetzt, dessen Aktivmasse eine BET-Oberfläche von 40 - 150 m²/g aufweist. Das Porenvolumen - gemessen nach der Hg-Penetrationsmethode - beträgt vorzugsweise 200 - 600 mm³/g. Die mono- oder polymodale Porenradienverteilung ist so gewählt, daß die Häufigkeitsmaxima der Porenradien im Bereich von 5 - 10000 nm liegen. Als TiO₂-Modifikation wird bevorzugt die Anatas-Modifikation eingesetzt.

Zur Herstellung eines für ein erfindungsgemäßes Verfahren verwendbaren Katalysators wird TiO₂ mit den übrigen Oxiden bzw. ihren Vorläuferverbindungen, die sich durch Calzinieren bei 200 - 800° C in die Oxide überführen lassen, gemischt, und homogenisiert. Eine solche Mischung wird einer Mahl- oder Knetaktivierung unterzogen und nach üblichen keramischen Verfahren zu Vollkatalysatoren verarbeitet oder es werden damit inerte Trägerkörper nach üblichen Verfahren beschichtet. In beiden Fällen erfolgt abschließend eine Trocknung bei einer zwischen Raumtemperatur und 100° C liegenden Temperatur und ein Calzinieren bei 200 - 800° C. Auf diese Weise erhaltene Katalysatorformen sind beispielsweise Wabenkatalysator-Vollextrudate, beschichtete Metallgitter oder -folien, beschichtete Inert- oder Feuerfestkeramikträger.

Bei einem Dieselmotor mit 12 l Hubraum und 315 KW Leistung wurde ein 63-Liter-Katalysator mit einer Aktivmasse getestet, die sich aus (Gew.%) 75 % TiO₂, 8 % WO₃, 3 % V₂O₅, 8 % SiO₂, 1,5 % Al₂O₃, 2 % CaO und 0,5 % B₂O₃ zusammensetzt. Die Messung erfolgte an einem Motorprüfstand in einem Testzyklus nach ECE-R.49 (13-Stufen-Test). Dabei wurden die Stickoxide zu 76 %, die Kohlenwasserstoffe zu 87 % und die Partikel zu 50 % umgesetzt.

## Patentansprüche

1. Verfahren zur Reinigung dieselmotorischen Abgases, bei dem Abgas über einen Katalysator mit einer Aktivmasse geleitet wird, die in Gew.% sich aus
| | |
|---|---|
| 70 - 95 % | TiO₂, |
| 2 - 10 % | WO₃ und/oder MoO₃, |
| 0,1 - 5% | V₂O₅, |
| 0,1 - 8 % | CaO, |
| 0,1 - 8 % | Al₂O₃, |
| 0,1 - 5 % | B₂O₃ und |
| 0,1 - 10 % | SiO₂ |
zusammensetzt, wobei dem Abgasstrom stromaufwärts des Katalysators ein zur Reduktion von Stickoxiden geeignetes Reduktionsmittel zudosiert wird und im diesel motorischen Abgas simultan Stichoxide, kohlenwasserstoffe und Rußpartikel reduziert werden.

2. Verfahren nach Anspruch 1, **gekennzeichnet durch** eine Aktivmasse mit einer BET-Oberfläche von 40 - 150 m²/g.

3. Verfahren nach Anspruch 1 oder 2, **gekennzeichnet durch** Verwendung einer Aktivmasse mit einem Porenvolumen - gemessen nach der Hg-Penetrationsmethode - von 200 - 600 mm³/g.

4. Verfahren nach einem der Ansprüche 1 - 3, **gekennzeichnet durch** die Verwendung einer Aktivmasse mit einer mono- oder polymodalen Porenradienverteilung, wobei die Häufigkeitsmaxima der Porenradien im Bereich von 5 - 10.000 nm liegen.

5. Verfahren nach einem der Ansprüche 1 - 4, **dadurch gekennzeichnet, daß** TiO₂ in seiner Anatas-Modifikation verwendet wird.

## Claims

1. Method for cleaning diesel engine exhaust gas, in which exhaust gas is passed over a catalytic converter having an active material which is composed, in % by weight, of
| | |
|---|---|
| 70 - 95 % | TiO₂, |
| 2 - 10% | WO₃ and/or MoO₃, |
| 0.1 - 5% | V₂O₅, |
| 0.1 - 8% | CaO, |
| 0.1 - 8% | Al₂O₃, |
| 0.1 - 5% | B₂O₃ and |
| 0.1 - 10% | SiO₂, |
a reducing agent which is suitable for reducing nitrogen oxides being metered into the exhaust-gas stream upstream of the catalytic converter and oxides of nitrogen, hydrocarbons and soot particles being reduced simultaneously, in the diesel engine exhaust gas.

2. Method according to Claim 1, **characterized by** an active material which has a BET surface area of 40-150 m²/g.

3. Method according to Claim 1 or 2, **characterized by** the use of an active material which has a pore volume - measured using the Hg penetration method - of 200-600 mm³/g.

4. Method according to one of Claims 1-3, **characterized by** the use of an active material with a monomodal or polymodal pore radius distribution, the frequency maxima of the pore radii lying in the range of 5-10,000 nm.

5. Method according to one of Claims 1-4, **characterized in that** TiO₂ in its anatase modification is used.

## Revendications

1. Procédé d'épuration des gaz d'échappement d'un moteur diesel, dans lequel on envoie les gaz d'échappement sur un pot catalytique ayant une masse active qui se compose en pourcentage en poids
de 70 à 95 % de TiO₂,
de 2 à 10 % de WO₃ et/ou de MoO₃,
de 0,1 à 5 % de V₂O₅,
de 0,1 à 8 % de CaO,
de 0,1 à 8 % de Al₂O₃,
de 0,1 à 5 % de B₂O₃ et
de 0,1 à 10 % de SiO₂
un agent réducteur propre à réduire des oxydes d'azote étant ajouté de manière dosée au courant de gaz d'échappement en amont du pot catalytique, et les oxydes d'azote, les hydrocarbures et les particules de calamine étant réduits simultanément dans les gaz d'échappement du moteur diesel.

2. Procédé suivant la revendication 1, **caractérisé par** une masse active ayant une surface BET de 40 à 150 m²/g.

3. Procédé suivant la revendication 1 ou 2, **caractérisé par** l'utilisation d'une masse active ayant un volume de pores mesuré suivant la méthode de pénétration de Hg de 200 à 600 mm³/g.

4. Procédé suivant l'une des revendications 1 à 3, **caractérisé par** l'utilisation d'une masse active ayant une répartition monomodale ou polymodale des rayons de pores, les maximums de fréquence des rayons de pores étant dans l'intervalle de 5 à 10 000 nm.

5. Procédé suivant l'une des revendications 1 à 4, **caractérisé en ce que** l'on utilise du TiO₂ sous sa forme d'anatase.
